# EUROPEAN PATENT SPECIFICATION

(11) **EP 2 605 637 B1**
(45) Date of publication and mention of the grant of the patent: **10.10.2018**
(21) Application number: 11755470.9
(22) Date of filing: 19.08.2011
(51) Int. Cl.: A01D 45/02

(54) **HELICAL ACTING STRAIGHT SNAP ROLL FLUTES FOR CORN HEADER**
SPIRALWIRKENDE PFLÜCKWALZEN FÜR EINEN MAISPFLÜCKER
CANNELURES À ROULEAU DE COUPE DROITES À ACTION HÉLICOÏDALE POUR BEC CUEILLEUR À MAÏS

(30) Priority: 22.12.2010 US 201061426300 P; 22.12.2010 US 201061426277 P; 22.12.2010 US 201061426263 P; 22.12.2010 US 201061426234 P; 22.12.2010 US 201061426213 P; 22.12.2010 US 201061426193 P; 22.12.2010 US 201061426167 P; 22.12.2010 US 201061426141 P; 22.12.2010 US 201061426119 P; 22.12.2010 US 201061426072 P; 22.12.2010 US 201061425935 P; 22.12.2010 US 201061425920 P; 22.12.2010 US 201061425907 P; 22.12.2010 US 201061425887 P; 22.12.2010 US 201061425836 P; 22.12.2010 US 201061426090 P; 22.12.2010 US 201061425804 P; 19.08.2010 US 375196 P
(43) Date of publication of application: 26.06.2013
(73) Proprietor: Agco Corporation, Duluth, Georgia 30096-2568 (US)
(72) Inventor: LOHRENTZ, Randy, Buhler Kansas 67522 (US); MATOUSEK, Robert, Milan Illinois 61264 (US)
(74) Representative: AGCO Intellectual Property Department
(86) International application number: PCT/US2011/048388
(87) International publication number: WO 2012/024571

(56) References cited:
- WO-A1-01/08465
- DE-A1-102005 054 998
- FR-A1- 2 941 593
- US-A- 2 881 579
- US-A- 5 009 061
- US-B1- 7 752 829

## Description

### TECHNICAL FIELD

This invention relates to cutting and gathering stalk crops such as corn with a header coupled to an agricultural vehicle.

### BACKGROUND

Agricultural harvesters such as combines are typically equipped with a harvesting header. Corn headers are specifically designed to pick corn and vary in size from two-row units to twelve-row units or more. As the harvester moves through the field, each row-unit passes between rows of corn. Corn header row units typically use gathering chains to covey crop material and ears rearward toward a cross auger. A set of driven snap rolls, which rotate based on the speed of the harvester, grabs the corn stalks and forces them downward between stripper plates. The ears of corn are snapped free of the stalk and the cross auger passes the ears to the feeder housing of the harvester. If the snap rolls are operated too fast or too slow, ears of corn may be lost or entire corn stalks may be passed to the cross auger and feeder housing. WO-01/08465 discloses a stalk roll set wherein the stalk rolls each comprise flutes that project radially from the roll to which they are attached.

Known row units require two gathering chains and two tensioners which are heavy, expensive and wear out easily. Furthermore, the gathering chains create a complicated drive mechanism because the axes of the drive sprockets driving the chains are at right angles to the axes of the snap rolls. Also, the gathering chains do not effectively convey a large mass of crop in conditions when material other than ears of corn, such as stalks and leaves, are severed from the ground. What is needed is a simpler and more cost effective row unit that is capable of conveying a large mass of crop.

### BRIEF DESCRIPTION OF THE DRAWINGS

The accompanying drawings, which are incorporated in and constitute a part of this disclosure, illustrate a corn header suitable for embodying the invention, and various embodiments of the present invention. In the drawings:
FIG. 1 shows a perspective view of a corn header having a plurality of row units for an agricultural vehicle, the header being suitable for embodying snap rolls in accordance with the invention;
FIG. 2 shows a top view of the header of FIG. 1;
FIG. 3 shows a close-up view of a portion of the header of FIG. 1;
FIG. 4 shows a portion of the bottom of the header of FIG. 1;
FIG. 5 shows a close-up view of a portion of the bottom of the header of FIG. 1;
FIG. 6 shows a perspective view of a frame which forms part of a live row unit and part of an adjacent dead row unit;
FIGS. 7-9 is a top view of a pair of opposing snap rolls with straight flutes illustrating in sequence a point traveling from the leading end to the trailing ends of the snap rolls having a scissors action as the snap rolls rotate; and
FIGS. 10-12 is a front view of the pair of snap rolls of FIGS. 7-9 illustrating in sequence the point traveling from the leading end to the trailing ends of the snap rolls having a scissors action as the snap rolls rotate.

### DESCRIPTION OF EXAMPLE EMBODIMENTS

The present invention is susceptible of embodiment in many different forms. While the drawings illustrate and the specification describes certain preferred embodiments of the invention, it is to be understood that such disclosure is by way of example only. There is no intent to limit the principles of the present invention to the particular disclosed embodiments. References hereinafter made to certain directions, such as, for example, "left" and "right", are made as viewed from the front looking rearward.

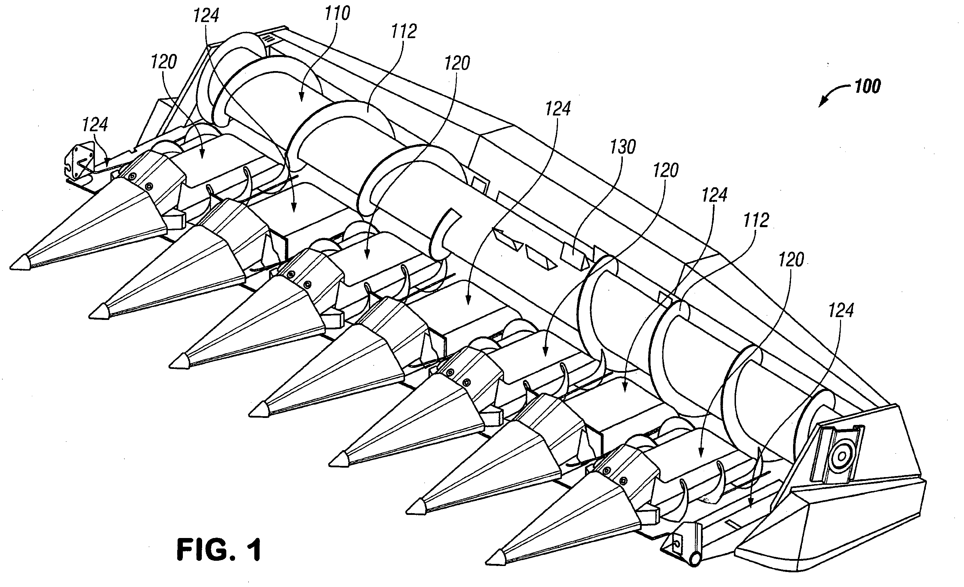

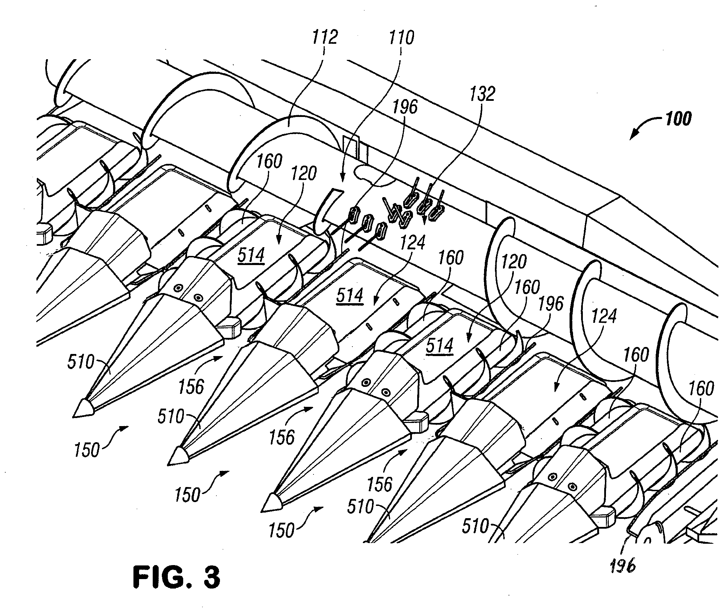

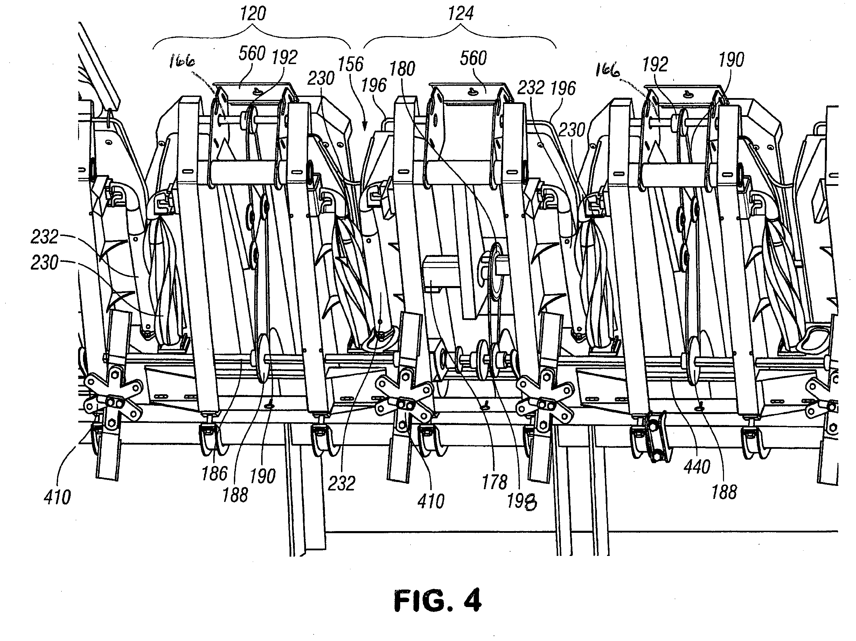

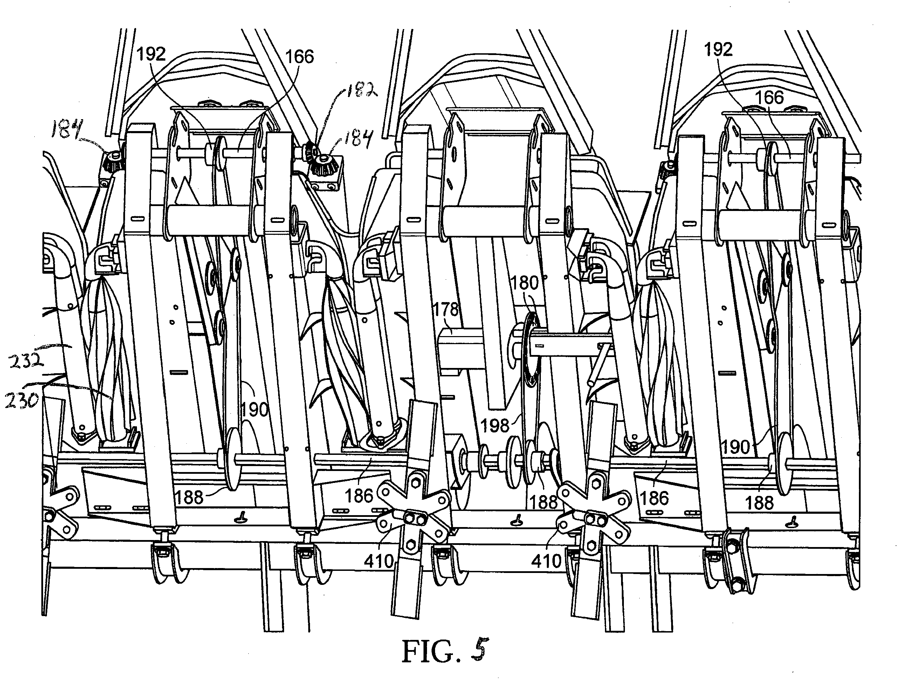

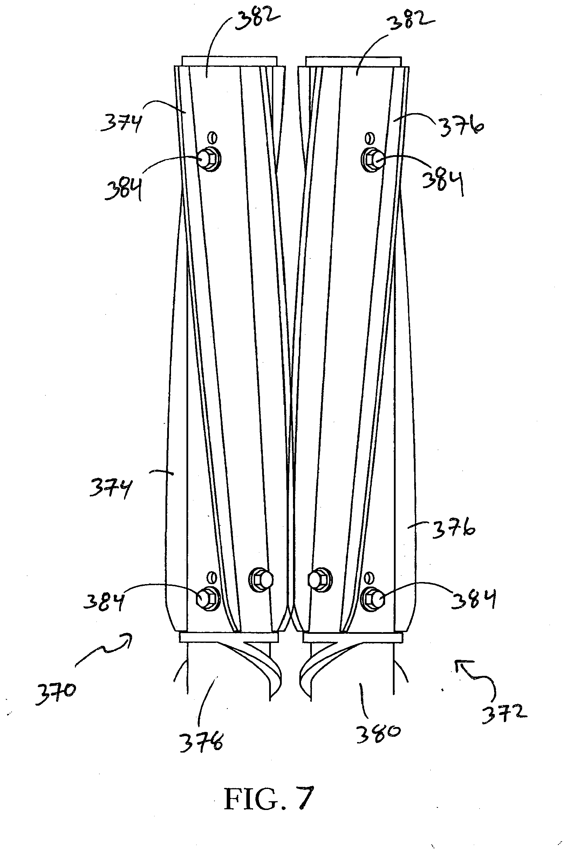

The exemplary header 100selected for illustration in FIGS. 1-5 has a cross auger 110 with spiral flighting 112 for sweeping the ears of corn toward the center of the header 100. The header 100 illustrated in FIGS. 1-5 represents background art and is suitable for embodying the snap rolls described below in relation to FIGS. 7-12. Large cross augers 110 may also have paddles 130, fingers 132 or some other means to facilitate the delivery of the crop rearward to the feeder housing of a harvester. The header 110 has a plurality of forward-extending live row-units 120 and a plurality of forward-extending dead row units 124. The row units 120, 124 and the cross auger 110 define a feeder plane therebetween where useable parts of stalk crops are conveyed rearward from the row units 120, 124 to the cross auger 110.

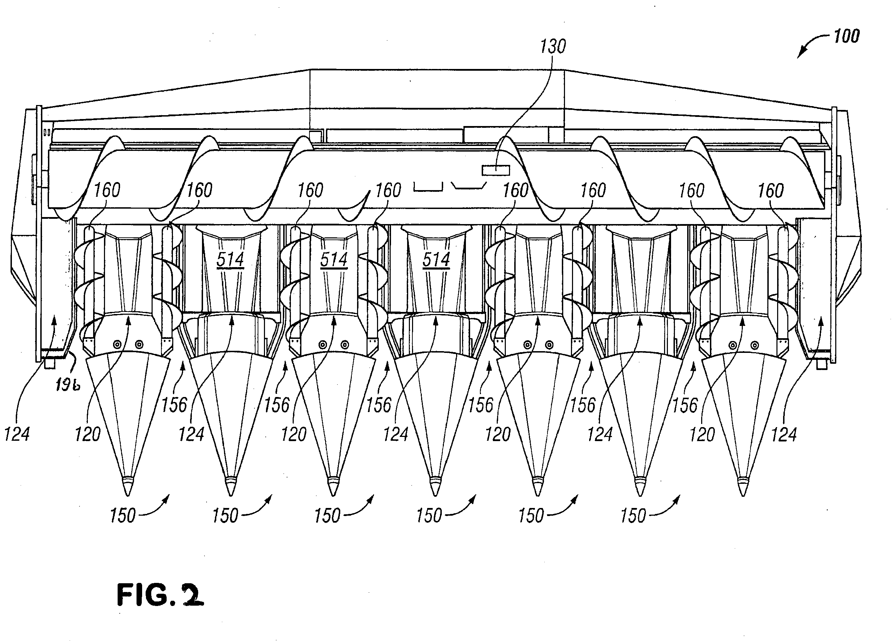

Live row units 120 and dead row units 124 cooperate with one another. Live row units 120 have powered components, as described in greater detail below, whereas the dead row units 124 generally do not have powered components. In one embodiment, as best shown in FIGS. 1 and 2, the header 110 has four live row units 120, three dead row units 124, plus one half of a dead row unit 124 on each end of the header 110. The row units 120, 124 are arranged relative to one another so that the row units 120, 124 alternate relative to each other along the length of the header 110. In other words, every other row unit is a live row unit 120 with a dead row unit 124 adjacent to each live row unit 120. The row units 120, 124 are spaced relative to one another to correspond with the spacing of the crop to be harvested and to provide a path to receive the crop therebetween. For example, a live row unit 120 may be placed between two dead row units 124 to cooperate therewith.

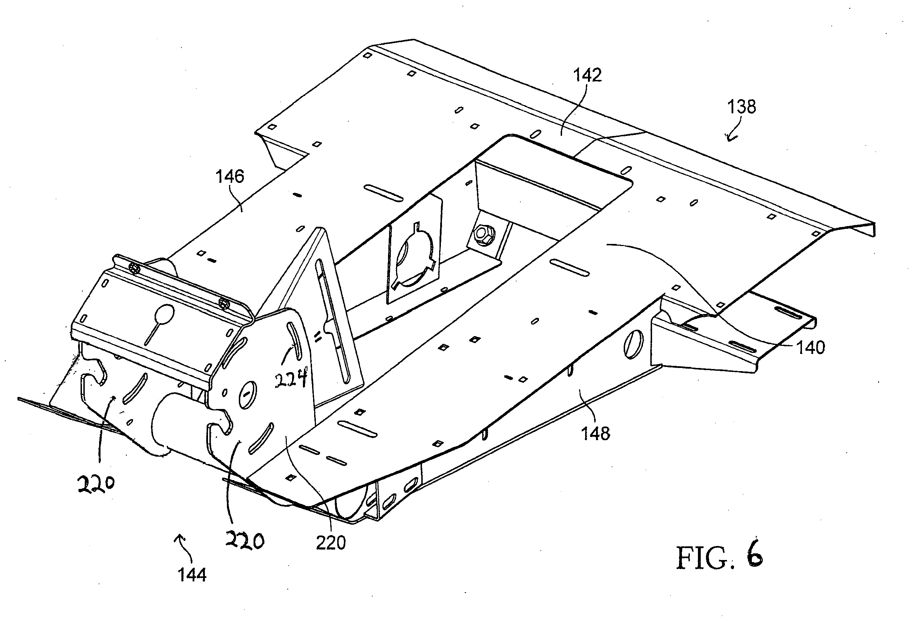

FIG. 6 illustrates a row assembly 138 having a frame 140, a back end 142 and a forward end 144. Half of the frame 140 forms part of a live row unit 120 and the other half forms part of a dead row unit 124. Therefore, one live row unit 120 includes two halves of two separate and adjacent frames 140. One dead row unit 124 includes two halves of two separate and adjacent frames. Each frame 140 includes a first portion 146 and a second portion 148 which are spaced from one another and protrude outwardly and forward from the back end 142. At the front and between adjacent row units 120, 124 is a crop entry 150 for receiving the stalks of the crop. The first and second portions 146,148 receive stripper plates 154 which cooperate with one another to define the crop passage 156 between adjacent row units 120, 124. The stripper plates 154 strip useable parts such as ears of corn from crop stalks that are received in the crop passage 156.

Each live row unit 120 includes at least one fore-to-aft gathering auger 160, in place of the two gathering chains and tensioners, for conveying the useable parts rearward to the cross auger 110. Each gathering auger 160 has a proximal end and a distal end and is preferably aligned substantially with a corresponding crop passage 156. However, the axis of rotation of the gathering auger 160 may instead be misaligned with the crop passage 156 such that the crop stalks in the back of the crop passage may be urged more so toward the gathering auger 160 than the crop stalks are at the beginning of the crop passage 156.

Preferably, each live row unit 120 includes a pair of counter-rotating augers 160. The dead row units 124, on the other hand, do not include gathering augers 160 or any gathering chains. Therefore, the complexity of the header 110 is reduced by utilizing gathering augers 160 on live row units 120 instead of gathering chains and tensioners. Also, by utilizing dead row units 124 in combination with the live row units 120 the overall complexity of the header 110 is substantially reduced because the dead row units 124 do not have gathering augers 160 or gathering chains and tensions and also because the drive means for driving the gathering augers 160 is simpler than known drives used in combination with gathering chains.

The gathering augers 160 are preferably driven independently of the snap rolls. The gathering auger 160 may be driven by electrical, mechanical or hydraulic means. Preferably, each gathering auger 160 is cantilevered from the frames 140 and rotationally driven from the forward most end of its respective row unit 120 away from the cross auger 110 rather than the rear of the row unit 120 in close proximity to the cross auger 110 so that the delivery or the distal end of the gathering auger 160 is not obstructed. This allows ears and stalks to be delivered to the cross auger 110 unimpeded by bearing supports, drive mechanisms or some other crop impeding structure.

The proximal end of one or more gathering augers 160 is coupled to the frame 140 of the row unit 120 in a manner that permits the distal end of the gathering auger 160 to move into and out of the feeder plane. In one embodiment, a mechanism coupled to the proximal end of the gathering auger 160 allows the gathering auger 160 to rotate or pivot in a vertical plane between a first position for processing crops when harvesting and a second position for maintenance purposes. Preferably, the distal end of the gathering auger when in the first position is higher in the vertical plane than when the distal end is in the second position.

Also, the gathering auger 160 preferably pivots partially about a substantially horizontal rotational axis that extends substantially transversely between the row units 120. The gathering auger 160 may be pivoted such that its distal end is raised upward above the row unit 120 to allow the gathering auger 160 to be repaired, replaced or perform maintenance without interference from the cross auger 110. Also, when the gathering auger 160 is pivoted upward out of the feeder plane other components can be more easily accessed.

An arrangement of gears or wheels such as bevel gears 182, 184 may be used for transmission of the driving motion to the gathering auger 160 from a driven shaft 166 within each live row unit 120 while also allowing the distal end of the gathering auger 160 to pivot upward about the same axis of the shaft 166. Each shaft 166 preferably drives a pair of gathering augers 160 of a single live row unit 120 so that the pair of gathering augers are driven about the same axis about which they may pivot into and out of the feeder plane. When the gathering auger 160 is pivoted upward, fasteners may be removed from the auger 160 so that the outer flighting portion of the gathering auger 160 may slide rearward so that it may be removed from an inner shaft and from cylindrical bearings allowing the flighting portion to rotate about the inner shaft.

A mounting bracket 210 rotationally couples the gathering auger 160 to an outer side of the frame 140 of the row assembly 138, such as vertical mounting support 220, to secure the gathering auger 160 to the frame 140 in an operational manner. The vertical mounting support 220 includes radial extending openings or arched slots 224 for receiving fasteners 226 for securing the mounting bracket 210 to the frame 140. When the distal end of the gathering auger 160 is pivoted upward, the distal end of the gathering auger 160 coupled to the mounting bracket 210 causes the mounting bracket 210 to rotate in the slots 224 of the vertical mounting support 220. The length of the arched slots 224 dictate the range the gathering auger 160 can be pivoted between the first and second positions. The range of motion of the distal end of the gathering auger 160 may be limited by the length or shape of the slots 224.

The pair of straight bevel gears 182, 184, in mesh are used to drive the gathering auger 160 while harvesting. The shaft 166 of the live row unit 120 corresponds with the axis upon which one or more augers 160 pivot. The distal end of the gathering auger 160 is coupled to the bevel gear 184 which is driven by the bevel gear 182 on shaft 166. The shaft 166 may be chain driven by a hydraulic drive motor 178 with sprocket 180. Preferably, the drive motor 178 is sufficiently sized to drive all of the gathering augers 160. The drive motor 178 and sprocket 180 with chain 198 drives sprocket 188 and shaft 186 which extends in a transverse manner along the length of the header 100. There are preferably numerous other sprockets 188 along the length of the shaft 186. The number of sprockets 188 depends on the number of live row units 120. Chains 190 extend from the sprockets 188 of the shaft 186 to sprockets 192 on shaft 166.

Because the augers 160 are driven by the drive motor 178, the speed of the augers 160 is independent of the speed of the cross auger 110. The chain 190 driving the sprocket 192 which in turn drives the shaft 166 with bevel gears 182. The speed of the augers 160 can be changed automatically or manually in relation to the ground speed much like current grain headers on harvesters that control reel speed. Moreover, the augers 160 can be driven independent of the snap rolls. The speed of the gathering augers 160 may be varied while either or both the harvester and the snap rolls are maintained at a constant speed.

In addition to the apparatuses described herein, the disclosure include a method for harvesting crop with an attachment for an agricultural vehicle that includes the gathering augers 160. The method includes operating the gathering augers 160 at a first speed to gather crop stalks in the crop passages 156 and operating a snap roll for removing useable parts from crop stalks at a second speed independently of the gathering augers 160. The method may also include one or more of the following steps: varying the speed of the gathering augers 160 while the speed of the snap rolls remain constant, increasing the speed of the gathering augers 160 while the speed of the snap rolls remain constant, decreasing the speed of the gathering augers 160 while the speed of the snap rolls remain constant, varying the speed of the snap rolls while the speed of the gathering augers 160 remain constant, increasing the speed of the snap rolls while the speed of the gathering augers 160 remain constant, decreasing the speed of the snap rolls while the speed of the gathering augers 160 remain constant, and/or changing the speed of the gathering augers 160 relative the ground speed of the harvester.

To keep stalks captured and engaged by the gathering auger 160 an elongated member 196 such as a rod is positioned in close proximity to the flighting of the gathering auger 160. Preferably, the elongated member 196 is substantially parallel aligned with the gathering auger 160. However, in other embodiments, at least a portion of the elongated member 196 may be shaped or curved along its length or the distal end of the elongated member 196 may be closer in proximity to the distal end of the gathering auger 160. The elongated member 196 may be rigid, flexible, or semi-flexible to urge the stalks in the crop passage toward the gathering auger 160. In one or more embodiments, the elongated member 196 is cantilevered off the forward end 144 of the frame 136 of the dead row unit 124 to urge the stalks in the crop passage 156 toward the gathering auger 160 of the opposing live row unit 120. The dead row unit may also include a second elongated member 196 extending toward another gathering auger 160 of another live row unit. In an alternative embodiment, the elongated member 196 may be a strap or be detachably coupled or mounted to a row unit.

Underneath the stripper plates 154 of each frame 140 are one or more snap rolls. At each crop passage 156 there is one driven snap roll 230 on one side of the crop passage 156 and one or more undriven idler rolls 232 opposing the snap roll 230 from the other side of the crop passage 156. Angled bearing supports may be used to mount the snap rolls and idler rolls to the frames.

Because the idler rolls 232 are undriven, the powered snap roll 230 is operated at different speeds relative to the idler rolls 232. Preferably, the powered snap roll 230 opposes a pair of idler rolls 232. On each side of a live row unit 120 there is a driven snap roll 230 and on each side of a dead row unit 124 there is at least one idler roll 232. Preferably, each side of the dead row unit 124 includes two idler rolls 232 for a total of four idler rolls 232 for each dead row unit 124. Unpowered idler rolls 232 preferably have smooth outer peripheries without knives or bars and are lighter and less expensive which helps to conserve power that could instead be used to chop stalks with mowers as described below.

Preferably, the powered snap rolls 230 include knives 234. If the idler roll 232 where to be powered it could be powered at a slower speed than an opposing snap roll 230. Also, the idler roll 232 could be adjustable relative to the side of the frame 136 of a dead row unit 124 so that it could be moved closer to the snap roll 230 for stalk chopping or moved away when reduced stalk chopping is desired.

One or both ends of the idler roll 232 could also be spring loaded to allow it to move away if an obstruction is encountered in the crop passage 156. The angle bearing could incorporate a spring or a spring could be used at the opposite end to bias the idler roll toward the crop stalks and the opposing snap roll but then also allow an obstruction to pass between the opposing idler and snap rolls by compressing the springs.

The disclosure also include a method for harvesting stalk crops with an attachment for an agricultural vehicle. The method includes pulling crop stalks in a crop passage with a snap roll against at least one stripper plate. The method also includes biasing the snap roll toward the crop stalks in the crop passage and allowing the snap roll to move laterally in the event of an obstruction in the crop passage impacting the snap roll. The movement of the snap roll allows the obstruction to pass.

A single idler roll 232 is preferably offset from its opposing snap roll 230 in that the snap roll 230 and idler roll 232 are at different heights or different distances from the ground so that the corn plant is not pulled straight down or in other words is pulled down at other than a perpendicular angle to the ground. If utilizing a pair of idler rolls 232 to oppose the snap roll 230, upper and lower idler rolls 232 are positioned so that the axis of rotation of the driven roll 230 is vertically between but horizontally offset from the axis of rotation of each idler roll 232. The axes of rotation of both idler rolls 232 are preferably both parallel and vertically aligned with each other because the idler rolls 232 are at different distances from the ground relative to each other.

One or more idler rolls 232 vertically offset from their opposing and corresponding snap roll 230 helps to lean or urge the corn plant toward the gathering auger 160 which is positioned on one side of a live row unit 120. Also, in one or more embodiments, the stripper or deck plates 154 may also be offset from one another relative to the ground to urge the crop to the side of the crop passage 156 with the gathering auger 160. Improved cutting action is achieved by running the knives 234, also commonly referred to as flutes or bars, of the powered snap rolls 230 in close proximity to the one or more opposing idler rolls 232. A pair of idler rolls 232 cooperating with one another to oppose a snap roll 230 further increase the cutting and chopping ability by enhancing the engagement of the stalks in the knives 234 of the snap roll 230. The header 100 may be equipped with one or more straight helicalacting snap rolls. The snap roll includes a plurality of straight knife or straight bar portions arranged to extend outward from the roll and relative to one another to achieve the same results that a formed helical knife would. Because the portions are straight relative all or at least most of their lengths they are free of a formed twist and therefore easier to manufacture compared to a twisted helical knife. Some of the straight portions are closer in proximity to the leading end of the snap roll while others are closer to the trailing end. But leading ends of the trailing straight portions extend forward of or overlap trailing ends of the leading straight portions creating a continuous cutting action. Therefore, the length of a leading straight portion is partially parallel misaligned with the length of a corresponding trailing straight portion on their respective side of the snap roll. Each of the straight portions does not extend beyond its own flat member or outer surface. The straight portions of a pair of opposing and counter-rotating snap rolls cooperate with one another to chop crop stalks and create a helical action to convey crop stalks rearward. Preferably, each portion includes a distal cutting or knife edge that is elliptical rather than having an edge of constant radius.

The straight knife/bar portions are mounted to flat members which are in turn preferably mounted with fasteners to outer sides or surfaces of the body of the snap roll. Other than cones, the outer surfaces of the snap roll are preferably flat or at least other than round for easy of manufacture. The straight portions are mounted at an angle rather than parallel aligned to the rotational axis of the snap roll. In other words, the straight portions are misaligned with the central axis of rotation of the snap roll.

Knife portions on one snap roll should run in close proximity to the knife portions on a counter-rotating and opposing snap roll to achieve a scissors like action that continuously chops and cuts stalks. The knife portions are preferably mounted so that the distal edges of the opposing knife portions are run point to point but may instead be run point to heel. Because the opposing snap rolls are rotating in opposite directions the opposing knife portions run in the same direction downward between the opposing snap rolls. When the knives of opposing snap rolls are point to heel the knives are considered to be going in the same direction down between the opposing snap rolls. When the knives of opposing rolls are point to point the knives are considered to run to each other because the points of opposing knife portions face one another.

In one or more embodiments, the header 100 includes opposing and counter-rotating snap rolls 370, 372 having straight portions 374, 376, respectively, as shown in FIGS. 7-12. The straight portions 374, 376 preferably extend along most or all of the length of the snap rolls 370, 372 (excluding the pickup cones 378, 380) and therefore the snap rolls 370, 372 are free of a formed twist. Each one of the straight portions 374, 376 is mounted to a flat member 382 which is in turn preferably mounted with fasteners 384 to outer sides or surfaces of the body of the snap rolls 370, 372. The outer sides are preferably flat or otherwise other than round to facilitate receiving the flat members 382 and ease of manufacture. Each straight portion 374, 376 extends longitudinally on the snap rolls 370, 372 but diagonally across a corresponding side of its respective snap roll 370, 372. As the snap rolls 370, 372 counter-rotate, distal edges of each of straight portion of snap roll 370 extends outward to oppose distal edges of each corresponding straight portion 376 of snap roll 372. The distal edges are preferably at least partially elliptical in shape.

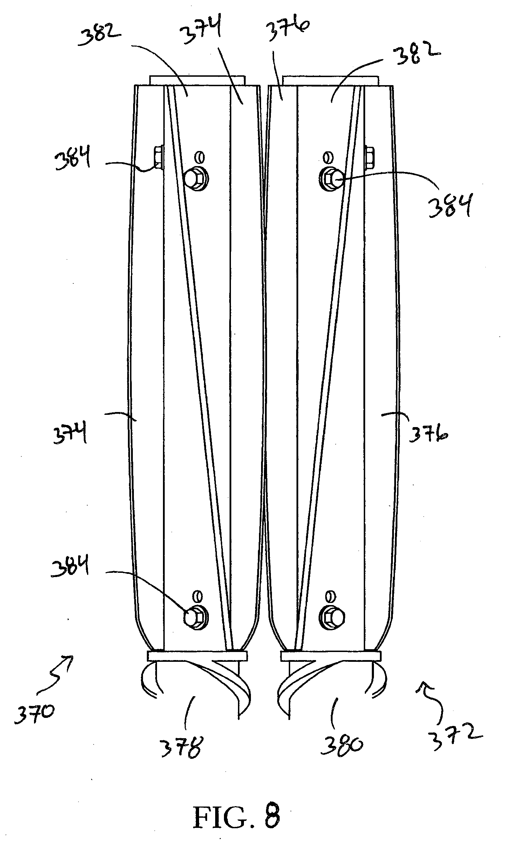

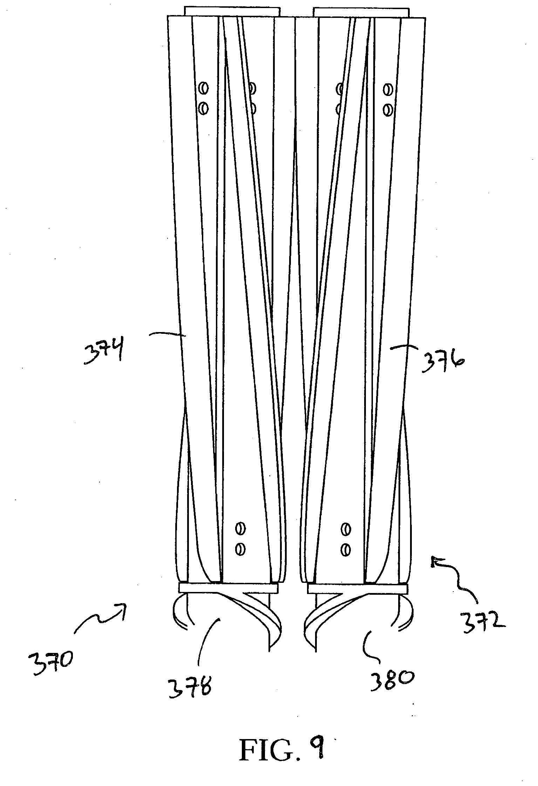

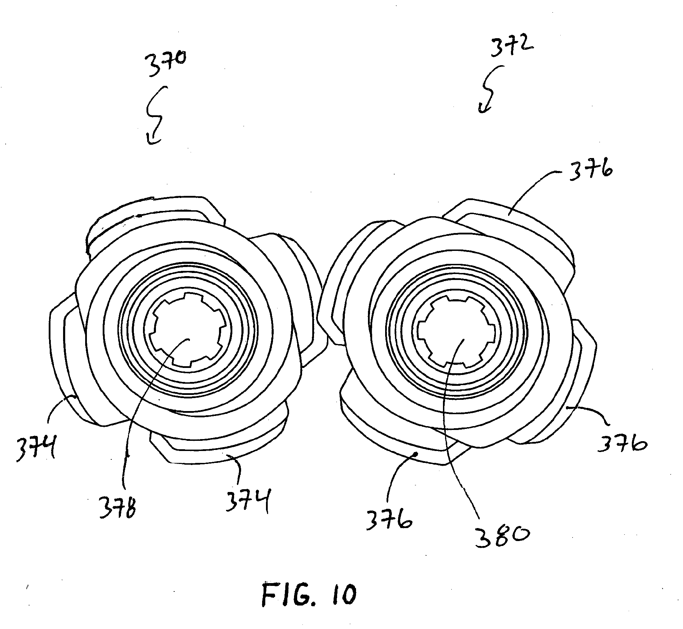

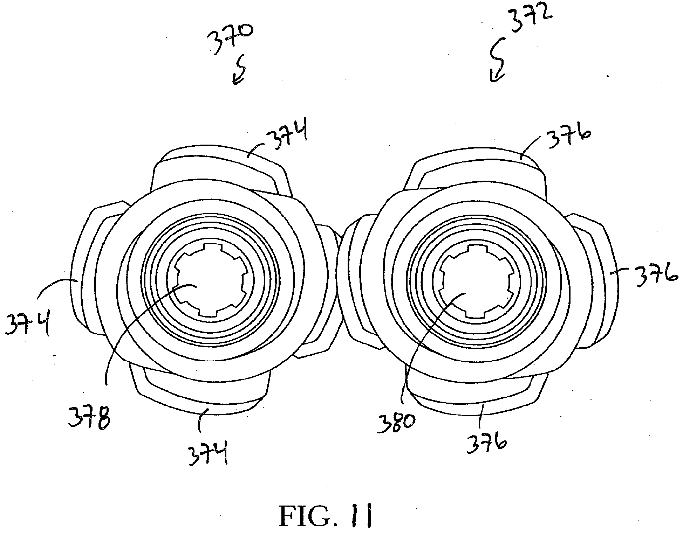

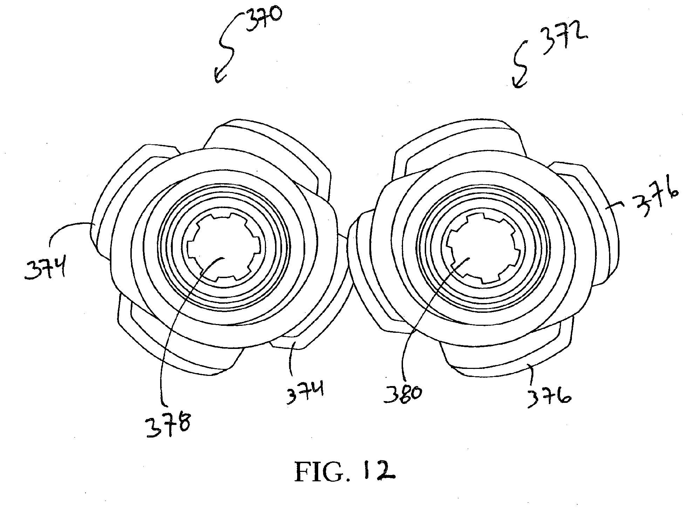

As best shown in the sequence of FIGS. 7-9 and again in FIGS. 10-12, when snap rolls 370, 372 are counter-rotating a portion of one straight portion 374 of snap roll 370 works along a portion of a corresponding straight portion 376 of snap roll 372 to define a point for engaging crop stalks between corresponding straight portions 374, 376. As snap rolls 370, 372 counter-rotate the point moves from leading ends of the snap rolls 370, 372 toward trailing ends of the snap rolls 370, 372. A scissors action is defined at the point as the point moves that creates a continuous cutting action. The corresponding straight portions 374, 376 separate from one another following the point as the point moves from leading ends to trailing ends of the straight portions 374, 376. FIGS. 7 and 10 illustrate the point along corresponding straight portions 374, 376 at the leading ends of the snap rolls 370, 372. FIGS. 8 and 11 illustrate the point along corresponding straight portions 374, 376 in the middle of the opposing snap rolls 370, 372. FIGS. 9 and 12 illustrate the point along corresponding straight portions 374, 376 at the trailing ends of the opposing snap rolls 370,372.

Still referring to FIGS. 7-12, each of the straight portions of snap 374 roll 370 corresponds with a respective one of the straight portions 376 of snap roll 372 during a single rotation of snap rolls 370, 372. During one revolution of the snap rolls 370, 372 the point runs substantially the entire lengths of the corresponding straight portions 374, 376. Corresponding straight portions 374, 376 are continuously displaced from one another until working against one another again at their leading edges during a subsequent rotation of the snap rolls 370, 372. During each revolution of the snap rolls 370, 372, another straight portion of each snap roll 370, 372 correspond with each other to define another point that moves from leading ends to trailing ends of these other corresponding straight portions 374, 376.

Straight portions 374, 376 are substantially straight relative at least most of their length, but because each straight portion 374, 376 extends diagonally, they are misaligned with a central axis of rotation of their respective snap roll 370, 372. A leading end of each straight portion 374 extends toward an edge of a corresponding side of its respective snap roll and its trailing end extends toward another opposing edge of the same side. The straight portions 374 of snap roll 370 cooperate with straight portions 376 of snap roll 372 to chop crop stalks passing therebetween. Counter-rotation of snap rolls 370, 372 chops and pulls crop stalks passing therebetween downward toward the ground while also creating a helical action with straight portions 374, 376 such that the crop stalks are conveyed rearward. The downward pulling, chopping and reward conveying are performed substantially simultaneously.

The foregoing has broadly outlined some of the more pertinent aspects and features of the present invention. These should be construed to be merely illustrative of some of the more prominent features and applications of the invention. Other beneficial results can be obtained by applying the disclosed information in a different manner or by modifying the disclosed embodiments. Accordingly, other aspects and a more comprehensive understanding of the invention may be obtained by referring to the detailed description of the exemplary embodiments taken in conjunction with the accompanying drawings, in addition to the scope of the invention defined by the claims.

## Claims

1. A first snap roll (370) for a harvesting header (100) comprising a first plurality of outwardly and longitudinally extending straight portions (374), said straight portions (374) substantially straight relative at least most of their length, **characterized in that** said straight portions (374) are misaligned with a central axis of rotation of said first snap roll.

2. The first snap roll (370) of Claim 1, in combination with a second snap roll (372) having a second plurality of outwardly and longitudinally extending straight portions (376) wherein counter-rotation of said first and second snap rolls (370,372) with said first and second plurality of straight portions pulls crop stalks passing therebetween downward toward the ground while also chopping and conveying the crop stalks rearward.

3. A first snap roll (370) according to Claim 1 in combination with a second snap roll (372) for harvesting stalk crops wherein said first and second snap rolls (370,372) comprise first and second pluralities of straight portions (374,376), respectively, each of said straight portions (374,376) substantially straight relative at least most of their length, said first and second snap rolls opposing one another and when counter rotating a portion of one of said straight portions (374) of said first snap roll (370) works along a portion of a corresponding one of said straight portions (376) of said second snap roll (372) to define a point for engaging crop stalks between said corresponding straight portions (374,376) and as said first and second snap rolls counter rotate said point moves from leading ends of said first and second snap rolls toward trailing ends of said first and second snap rolls, said corresponding straight portions (374,376) separating from one another following said point as said point moves from leading ends to trailing ends of said straight portions of said first and second snap rolls.

4. The first and second snap rolls of Claim 3 wherein during one revolution of said first and second snap rolls (370, 372) said point runs substantially the entire lengths of said corresponding straight portions (374, 376).

5. The first and second snap rolls of Claim 3 wherein each of said straight portions (374) of said first snap roll (370) corresponds with a respective one of said straight portions (376) of said second snap roll (372) during a single rotation of each of said first and second snap rolls.

6. The first and second snap rolls of Claim 3 wherein said corresponding straight portions (374, 376) are continuously displaced from one another until working against one another again at leading edges of said corresponding straight portions during a subsequent rotation of said first and second snap rolls (370, 372).

7. The first and second snap rolls of Claim 3 wherein another straight portion (374, 376) of each of said first and second snap rolls (370, 372) correspond with each other to define another point wherein said other point moves from leading ends to trailing ends of said other straight portions of said first and second straight portions.

8. The first and second snap rolls of Claim 3 further comprising a continuous scissors action at said point as said point moves.

9. The first and second snap rolls of Claim 3 wherein said first and second snap rolls (370,372) each comprise an outer surface with said first and second plurality of straight portions (374,376) extending from said respective outer surfaces, distal edges of each of said straight portions of said first snap roll extending from said outer surface of said first snap roll such to oppose distal edges of each corresponding said second plurality of straight portions.

10. The first and second snap rolls of Claim 3 wherein counter-rotation of said first and second snap rolls (370, 372) chops and pulls crop stalks passing therebetween downward toward the ground while also creating a helical action with said first and second plurality of straight portions (374, 376) such that the crop stalks are conveyed rearward.

11. The first and second snap rolls of Claim 3 wherein an outer surface of each of said first and second snap rolls (370, 372) is other than round.

12. The first and second snap rolls of Claim 11 wherein said outer surfaces each comprise a plurality of sides, each said straight portion extending diagonally across a corresponding one of said sides.

13. The first and second snap rolls of Claim 12 wherein each said side is flat.

14. The first and second snap rolls of Claim 3 wherein each said straight portion (374, 376) includes a distal edge that is at least partially elliptical in shape.

15. The first and second snap rolls of Claim 3 wherein said first and second snap rolls (370, 372) are otherwise free of a twist.

16. The first and second snap rolls of Claim 3 wherein each of said first and second snap rolls (370, 372) comprises an outer surface defined by a plurality of sides and wherein a leading end of one of said straight portions extends toward an edge of a corresponding one of said sides and a trailing end of said one straight portion extends toward another opposing edge of said corresponding one of said sides.

17. The first and second snap rolls of Claim 3 wherein said straight portions (374) of said first snap roll (370) cooperate with said straight portions (376) of said second snap roll (372) to chop crop stalks passing between said first and second snap rolls.

## Patentansprüche

1. Erste Pflückwalze (370) für ein Erntevorsatzgerät (100) mit einer ersten Mehrzahl von sich nach außen und längs erstreckenden geraden Abschnitten (374), wobei die geraden Abschnitte (374) in Bezug auf zumindest den größten Teil ihrer Länge im Wesentlichen gerade sind, **dadurch gekennzeichnet, dass** die geraden Abschnitte (374) zu einer Rotations-Mittelachse der ersten Pflückwalze versetzt sind.

2. Erste Pflückwalze (370) nach Anspruch 1, kombiniert mit einer zweiten Pflückwalze (372) mit einer zweiten Mehrzahl von sich nach außen und längs erstreckenden geraden Abschnitten (376), wobei eine entgegengesetzte Rotation der ersten Pflückwalze (370) mit der ersten Mehrzahl der geraden Abschnitte und der zweiten Pflückwalze (372) mit der zweiten Mehrzahl der geraden Abschnitte zwischen ihnen hindurchtretende Erntegutstängel nach unten in Richtung auf den Boden zieht, während sie die Erntegutstängel außerdem schneidet und nach hinten fördert.

3. Erste Pflückwalze (370) nach Anspruch 1, kombiniert mit einer zweiten Pflückwalze (372) zum Ernten stängeligen Ernteguts, wobei die erste Pflückwalze (370) eine erste Mehrzahl von geraden Abschnitten (374) und die zweite Pflückwalze (372) eine zweite Mehrzahl von geraden Abschnitten (376) aufweist, wobei jeder der geraden Abschnitte (374, 376) in Bezug auf zumindest den größten Teil seiner Länge im Wesentlichen gerade ist, wobei die erste Pflückwalze und die zweite Pflückwalze einander entgegengesetzt sind und, wenn sie einander entgegengesetzt rotieren, ein Abschnitt der ersten geraden Abschnitte (374) der ersten Pflückwalze (370) entlang eines Teils eines korrespondierenden der geraden Abschnitte (376) der zweiten Pflückwalze wirksam ist, um einen Punkt zum Erfassen von Erntegutstängeln zwischen den korrespondierenden geraden Abschnitten (374, 376) zu definieren und, während die erste und die zweite Pflückwalze einander entgegengesetzt rotieren, sich der Punkt von führenden Enden der ersten und der zweiten Pflückwalze in Richtung auf nachlaufende Enden der ersten und der zweiten Pflückwalze bewegt, wobei sich die korrespondierenden geraden Abschnitte (374, 376) hinter dem Punkt voneinander trennen, während sich der Punkt von führenden Enden zu nachlaufenden Enden der geraden Abschnitte der ersten und zweiten Pflückwalze bewegt.

4. Erste Pflückwalze und zweite Pflückwalze nach Anspruch 3, wobei sich der Punkt während einer Umdrehung der ersten und der zweiten Pflückwalze (370, 372) im Wesentlichen über die gesamte Länge der korrespondierenden geraden Abschnitte (374, 376) bewegt.

5. Erste Pflückwalze und zweite Pflückwalze nach Anspruch 3, wobei jeder der geraden Abschnitte (374) der ersten Pflückwalze (370) mit einem der geraden Abschnitte der zweiten Pflückwalze während einer einzigen Umdrehung jeder der ersten und der zweiten Pflückwalze korrespondiert.

6. Erste Pflückwalze und zweite Pflückwalze nach Anspruch 3, wobei die korrespondierenden geraden Abschnitte (374, 376) fortlaufend voneinander fortbewegt werden, bis sie an führenden Kanten der korrespondierenden geraden Abschnitte während einer nachfolgenden Rotation der ersten und der zweiten Pflückwalze (370, 372) gegeneinander arbeiten.

7. Erste Pflückwalze und zweite Pflückwalze nach Anspruch 3, wobei ein weiterer gerader Abschnitt (374, 376) sowohl der ersten als auch der zweiten Pflückwalze (370, 372) jeweils miteinander korrespondiert und so einen weiteren Punkt definiert, wobei der weitere Punkt sich von führenden Enden zu nachlaufenden Enden der weiteren geraden Abschnitte der ersten und zweiten geraden Abschnitte bewegt.

8. Erste Pflückwalze und zweite Pflückwalze nach Anspruch 3, die weiterhin eine durchgängige Scherenbewegung an dem Punkt aufweisen, während sich der Punkt bewegt.

9. Erste Pflückwalze und zweite Pflückwalze nach Anspruch 3, wobei die erste und die zweite Pflückwalze (370, 372) jeweils eine Außenfläche mit der ersten und der zweiten Mehrzahl von geraden Abschnitten (374, 376) aufweisen, die sich von den jeweiligen Außenflächen weg erstrecken, wobei distale Kanten jedes der geraden Abschnitte der ersten Pflückwalze sich von der Außenfläche der ersten Pflückwalze so weg erstreckt, dass er distalen Kanten jeder der zweiten Mehrzahl von geraden Abschnitten gegenüberliegt.

10. Erste Pflückwalze und zweite Pflückwalze nach Anspruch 3, wobei eine gegenläufige Rotation der ersten und der zweiten Pflückwalze (370, 372) zwischen ihnen hindurchtretende Erntegutstängel schneidet und nach unten in Richtung auf den Boden zieht, während sie außerdem eine Schraubbewegung mit der ersten und der zweiten Mehrzahl von geraden Abschnitten (374, 376) bewirkt, sodass die Erntegutstängel nach hinten gefördert werden.

11. Erste Pflückwalze und zweite Pflückwalze nach Anspruch 3, wobei eine Außenfläche jeder der ersten und der zweiten Pflückwalze (370, 372) etwas anderes ist als rund.

12. Erste Pflückwalze und zweite Pflückwalze nach Anspruch 11, wobei die Außenflächen jeweils eine Mehrzahl von Seiten aufweisen, wobei sich jeder der geraden Abschnitte diagonal über eine korrespondierende der Seiten erstreckt.

13. Erste Pflückwalze und zweite Pflückwalze nach Anspruch 12, wobei jede Seite flach ist.

14. Erste Pflückwalze und zweite Pflückwalze nach Anspruch 3, wobei jeder der geraden Abschnitte (374, 376) eine distale Kante aufweist, die in ihrer Form mindestens teilweise elliptisch ist.

15. Erste Pflückwalze und zweite Pflückwalze nach Anspruch 3, wobei die erste und die zweite Pflückwalze weiterhin frei von einer Verdrehung sind.

16. Erste Pflückwalze und zweite Pflückwalze nach Anspruch 3, wobei jede der ersten und der zweiten Pflückwalze (370, 372) eine Außenfläche aufweist, die durch eine Mehrzahl von Seiten definiert ist und wobei ein führendes Ende eines der geraden Abschnitte sich in Richtung auf eine Kante einer korrespondierenden der genannten Seiten erstreckt und ein nachlaufendes Ende des einen geraden Abschnitts sich in Richtung auf eine weitere, entgegengesetzte Kante der korrespondierenden Seite erstreckt.

17. Erste Pflückwalze und zweite Pflückwalze nach Anspruch 3, wobei die geraden Abschnitte (374) der ersten Pflückwalze (370) mit den geraden Abschnitten (376) der zweiten Pflückwalze (372) zusammenwirken, um zwischen der ersten und der zweiten Pflückwalze hindurchtretende Erntegutstängel zu schneiden.

## Revendications

1. Premier rouleau de coupe (370) pour un bec cueilleur (100) comprenant une première pluralité de portions droites s'étendant vers l'extérieur et longitudinalement (374), lesdites portions droites (374) étant sensiblement droites par rapport à au moins la plus grande partie de leur longueur, **caractérisé en ce que** lesdites portions droites (374) sont mal alignées avec un axe de rotation central dudit premier rouleau de coupe.

2. Premier rouleau de coupe (370) selon la revendication 1, en combinaison avec un deuxième rouleau de coupe (372) ayant une deuxième pluralité de portions droites s'étendant vers l'extérieur et longitudinalement (376) dans lequel une contre-rotation desdits premier et deuxième rouleaux de coupe (370, 372) avec ladite première et deuxième pluralité de portions droites tire des tiges de récolte passant entre elles vers le bas vers le sol tout en hachant et transportant les tiges de récolte vers l'arrière.

3. Premier rouleau de coupe (370) selon la revendication 1 en combinaison avec un deuxième rouleau de coupe (372) pour la récolte de tiges de récolte dans lequel lesdits premier et deuxième rouleaux de coupe (370, 372) comprennent de première et deuxième pluralités de portions droites (374, 376), respectivement, chacune desdites portions droites (374, 376) étant sensiblement droite par rapport à au moins la plus grande partie de leur longueur, lesdits premier et deuxième rouleaux de coupe étant opposés l'un à l'autre et lorsqu'ils sont en contre-rotation une portion d'une desdites portions droites (374) dudit premier rouleau de coupe (370) fonctionne le long d'une portion d'une portion correspondante desdites portions droites (376) dudit deuxième rouleau de coupe (372) pour définir un point de mise en prise de tiges de récolte entre lesdites portions droites correspondantes (374, 376) et lorsque lesdits premier et deuxième rouleaux de coupe sont en contre-rotation ledit point se déplace des extrémités d'attaque desdits premier et deuxième rouleaux de coupe vers des extrémités de fuite desdits premier et deuxième rouleaux de coupe, lesdites portions droites (374, 376) correspondantes se séparant l'un de l'autre suivant ledit point à mesure que ledit point se déplace des extrémités d'attaque aux extrémités de fuite desdites portions droites desdits premier et deuxième rouleaux de coupe.

4. Premier et deuxième rouleaux de coupe selon la revendication 3 dans lesquels pendant une révolution desdits premier et deuxième rouleaux de coupe (370, 372), ledit point parcourt sensiblement toutes les longueurs desdites portions droites (374, 376) correspondantes.

5. Premier et deuxième rouleaux de coupe selon la revendication 3 dans lesquels chacune desdites portions droites (374) dudit premier rouleau de coupe (370) correspond à une portion respective desdites portions droites (376) dudit deuxième rouleau de coupe (372) pendant une seule rotation de chacun desdits premier et deuxième rouleaux de coupe.

6. Premier et deuxième rouleaux de coupe selon la revendication 3 dans lesquels lesdites portions droites (374, 376) correspondantes sont déplacées en continu l'une de l'autre jusqu'à ce qu'elles fonctionnent à nouveau l'une contre l'autre au niveau de bords d'attaque desdites portions droites correspondantes pendant une rotation subséquente desdits premier et deuxième rouleaux de coupe (370, 372).

7. Premier et deuxième rouleaux de coupe selon la revendication 3 dans lesquels une autre portion droite (374, 376) de chacun desdits premier et deuxième rouleaux de coupe (370, 372) correspondent l'une à l'autre pour définir un autre point dans lesquels ledit autre point se déplace des extrémités d'attaque aux extrémités de fuite desdites autres portions droites desdits premier et deuxième rouleaux de coupe.

8. Premier et deuxième rouleaux de coupe selon la revendication 3 comprenant en outre une action de ciseaux continue au niveau dudit point à mesure que ledit point se déplace.

9. Premier et deuxième rouleaux de coupe selon la revendication 3 dans lesquels lesdits premier et deuxième rouleaux de coupe (370, 372) comprennent chacun une surface extérieure avec ladite première et deuxième pluralité de portions droites (374, 376) s'étendant desdites surfaces extérieures respectives, des bords distaux de chacune desdites portions droites dudit premier rouleau de coupe s'étendant de ladite surface extérieure dudit premier rouleau de coupe de façon à s'opposer à des bords distaux de chaque portion correspondante de ladite deuxième pluralité de portions droites.

10. Premier et deuxième rouleaux de coupe selon la revendication 3 dans lesquels une contre-rotation desdits premier et deuxième rouleaux de coupe (370, 372) hache et tire des tiges de récolte passant entre elles vers le bas vers le sol tout en créant une action hélicoïdale avec ladite première et deuxième pluralité de portions droites (374, 376) de sorte que les tiges de récolte sont transportées vers l'arrière.

11. Premier et deuxième rouleaux de coupe selon la revendication 3 dans lesquels une surface extérieure de chacun desdits premier et deuxième rouleaux de coupe (370, 372) est autre que ronde.

12. Premier et deuxième rouleaux de coupe selon la revendication 11 dans lesquels lesdites surfaces extérieures comprennent chacune une pluralité de côtés, chaque dite portion droite s'étendant diagonalement à travers un côté correspondant desdits côtés.

13. Premier et deuxième rouleaux de coupe selon la revendication 12 dans lesquels chaque côté est plat.

14. Premier et deuxième rouleaux de coupe selon la revendication 3 dans lesquels chaque dite portion droite (374, 376) comprend un bord distal qui est au moins partiellement de forme elliptique.

15. Premier et deuxième rouleaux de coupe selon la revendication 3 dans lesquels lesdits premier et deuxième rouleaux de coupe (370, 372) sont autrement sans torsion.

16. Premier et deuxième rouleaux de coupe selon la revendication 3 dans lesquels chacun desdits premier et deuxième rouleaux de coupe (370, 372) comprend une surface extérieure définie par une pluralité de côtés et dans lesquels une extrémité d'attaque d'une desdites portions droites s'étend vers un bord d'un côté correspondant desdits côtés et une extrémité de fuite de ladite une portion droite s'étend vers un autre bord opposé dudit côté correspondant desdits côtés.

17. Premier et deuxième rouleaux de coupe selon la revendication 3 dans lesquels lesdites portions droites (374) dudit premier rouleau de coupe (370) coopèrent avec lesdites portions droites (376) dudit deuxième rouleau de coupe (372) pour hacher des tiges de récolte passant entre lesdits premier et deuxième rouleaux de coupe.
